# EUROPÄISCHE PATENTSCHRIFT

(11) **EP 0 710 355 B1**
(45) Veröffentlichungstag und Bekanntmachung des Hinweises auf die Patenterteilung: **29.04.1998**
(21) Anmeldenummer: 94923718.4
(22) Anmeldetag: 11.07.1994
(51) Int. Cl.: G01H 1/00

(54) **MONITORSYSTEM ZUR DARSTELLUNG VON SCHWINGUNGSZUSTÄNDEN EINER VIELZAHL VON SCHAUFELN AUF EINEM ROTIERENDEN LAUFRAD**
MONITORING SYSTEM FOR REPRESENTING THE STATES OF VIBRATION OF A PLURALITY OF BLADES ON A ROTATING WHEEL
SYSTEME DE CONTROLE SERVANT A REPRESENTER LES ETATS VIBRATOIRES D'UNE PLURALITE D'AILETTES SUR UNE ROUE MOBILE ROTATIVE

(30) Priorität: 20.07.1993 EP 93111618
(43) Veröffentlichungstag der Anmeldung: 08.05.1996
(73) Patentinhaber: SIEMENS AKTIENGESELLSCHAFT, 80333 München (DE)
(72) Erfinder: BÖRES, Hans-Jochen, D-45481 Mülheim an der Ruhr (DE); GLOGER, Meinrad, D-45481 Mülheim an der Ruhr (DE); JUNG, Michael, D-45147 Essen (DE)
(86) Internationale Anmeldenummer: EP9402258
(87) Internationale Veröffentlichungsnummer: WO9503530

(56) Entgegenhaltungen:
- EP-A- 0 327 865
- US-A- 4 934 192
- NTIS TECH NOTES, März 1987, SPRINGFIELD, VA US Seiten 298 - 299 'Portable computerized seismic recorder: designed as easy to use earthquake observation device'
- VGB-Fachtagung Dampfturbinen und Dampfturbinen- betrieb; 13/12/1990; Konferenzbericht S.4.1-4.11 M.GLOGER: Berürhrungslose Schaufelschwingungsmesztechnik in der Anmeldung erwähnt

## Beschreibung

Die Erfindung betrifft ein Monitorsystem zur Darstellung von Schwingungszustanden einer Vielzahl von Schaufeln auf einem rotierenden Laufrad,
a) mit einer ortsfesten Sensoreinrichtung mit zumindest einem dem Laufrad zugeordneten Sensor und einem damit verbundenen Impulsgeber, welcher Impulsgeber der Erzeugung eines Sensorimpulses dient, welcher Sensorimpuls einen Zeitpunkt markiert, zu dem eine Schaufel den Sensor passiert;
b) mit einem dem Laufrad zugeordneten Markengeber zur Erzeugung eines Markenimpulses, wenn sich das Laufrad in einer bestimmten Nullposition befindet;
c) mit einer Auswerteeinrichtung mit einem Zuordnungsmodul, welchem die Sensorimpulse und die Markenimpulse zuführbar sind und welcher der Zuordnung jedes Sensorimpulses unter Berücksichtigung der Markenimpulse zu derjenigen Schaufel, die ihn verursacht hat, sowie der Umwandlung der Sensorimpulse jeder Schaufel in Schwingungsdaten, die einen Schwingungszustand der Schaufel charakterisieren, dient;
d) mit einer Darstellungseinrichtung mit einem Darstellungsmedium zur Darstellung der Schwingungsdaten.

Ein solches Monitorsystem geht jeweils hervor aus dem Aufsatz "Berührungslose Schaufelschwingungsmeßtechnik" von M. Gloger, Konferenzbericht von der VGB-Fachtagung Dampfturbinen und Dampfturbinenbetrieb 1990, 13.12.1990 in Essen, Seiten 4.1 bis 4.11, dem US-Patent 4,934,192 sowie der EP 0 327 865 A2.

Die Erfindung bezieht sich insbesondere auf die Darstellung von Schwingungszuständen von Schaufeln, die während des regulären Betriebs einer Turbomaschine auftreten und, je nach Auslegung, bei bestimmten Betriebszuständen oder bei jedem Betriebszustand wesentliche Belastungen der Schaufeln mit sich bringen.

Ausführungen zur Auslegung von Schaufeln, insbesondere Schaufeln für Niederdruck-Dampfturbinen, finden sich in einem Aufsatz "Advanced LP Turbine Blading - A Reliable And Highly Efficient Design" von M. Gloger, K.H. Neumann, D. Bergmann und H. Termühlen, vorgestellt im Jahre 1992 auf der "1992 International Joint Power Generation Conference" in Atlanta, Georgia/USA, und in gedruckter Form veröffentlicht von der ASME Power Division. In diesem Aufsatz ist auch ein Monitorsystem zur Darstellung von Schwingungszustanden einer Vielzahl von Schaufeln der in der Einleitung genannten Art ersichtlich.

Weitere Ausführungen zur Darstellung von Schwingungszuständen von Schaufeln in Turbomaschinen finden sich in einem Aufsatz "Berührungslose Schaufelschwingungsmeßtechnik" von M. Gloger, Konferenzbericht von der VGB-Fachtagung Dampfturbinen und Dampfturbinenbetrieb 1990, 13. Dezember 1990 in Essen, Seiten 4.1 bis 4.11. Der gesamte Inhalt dieses Aufsatzes wird hiermit in diese Beschreibung einbezogen.

Systeme zum Nachweis von Schwingungen an Turbinenschaufeln gehen hervor aus dem US-Patent 4,934,192 und der EP 0 327 865 A2. Gemäß dem ersten Dokument werden vor allem axiale Schwingungen einer Turbinenschaufel, d.h. Schwingungen senkrecht zu der Ebene, in der die auf einem rotierenden Laufrad angebrachte Turbinenschaufel umläuft, nachgewiesen mittels zweier axial hintereinander angeordneter Sensoren; ein Nachweis tangentialer Schwingungen, also Schwingungen in der Ebene, in der die Turbinenschaufel umläuft, ist zusätzlich möglich. Die mit den Sensoren gewonnenen Meßwerte werden ausgewertet, wahlweise als Diagramm aufgezeichnet und überprüft, ob sie Anlaß zu einem Alarm geben. Nach dem zweitgenannten Dokument werden aus den mit geeigneten Sensoren erhaltenen Daten zu Schwingungen einer Turbinenschaufel Aussagen über die aufgrund der Schwingungen kumulierte Ermüdung des Werkstoffes der Turbinenschaufel gewonnen.

Das US-Patent 4,604,699 betrifft ein System zur Aufnahme, Auswertung und Darstellung von Daten, allerdings nicht in Verbindung mit einer Anwendung im Kraftwerkswesen, sondern in Verbindung mit der Beobachtung von Erdbeben.

Alle bisherigen Monitorsysteme der in der Einleitung genannten und in den zitierten Dokumenten des Standes der Technik beschriebenen Art eignen sich zur gelegentlichen Überprüfung von Schaufeln in Turbomaschinen wie Turbinen und Turboverdichtern, sie sind allerdings nicht geeignet für eine ständige Überwachung einer Turbomaschine während ihres regulären Betriebs. Dementsprechend kommen diese Monitorsysteme nicht in Frage zum Nachweis einer erhöhten Beanspruchung von Schaufeln, die bei bestimmten Betriebszuständen auftreten kann und aufgrund der komplexen für die Ausbildung von Schwingungen relevanten Geometrie der Schaufeln und der Strukturen, die die Schaufeln tragen, kaum mit hinreichender Präzision vorhersagbar ist. Insbesondere dann, wenn gelegentlich Betriebsbedingungen auftreten, die von Betriebsbedingungen abweichen, für die die Schaufeln ausgelegt wurden, kann niemals ausgeschlossen werden, daß an den Schaufeln Schwingungen mit erhöhten, unter Umständen bedenklichen, Amplituden auftreten.

Dementsprechend ist die Aufgabe der Erfindung die Angabe eines Monitorsystems zur Darstellung von Schwingungszuständen einer Vielzahl von Schaufeln auf einem rotierenden Laufrad zu schaffen, welches eine ständige Darstellung der Schwingungszustande erlaubt und vorzugsweise eine erhöhte Beanspruchung der Schaufeln durch Schwingungen so rechtzeitig anzeigen kann, daß der die Schwingungen hervorrufende Betriebszustand beendet werden kann, bevor eine Beeinträchtigung, insbesondere eine Beeinträchtigung der Lebensdauer der Schaufeln, eintritt. Ein solches Monitorsystem soll insbesondere für eine ständige Überwachung der Schaufeln geeignet sein; auch soll es vorzugsweise für jede Schaufel ständig relevante Schwingungsdaten darstellen bzw. für eine Darstellung bereithalten.

Zur Lösung dieser Aufgabe umfaßt das erfindungsgemäße Monitorsystem zur Darstellung von Schwingungszuständen einer Vielzahl von Schaufeln auf einem rotierenden Laufrad folgende Komponenten:
a) eine ortsfeste Sensoreinrichtung mit zumindest einem dem Laufrad zugeordneten Sensor und einem damit verbundenen Impulsgeber, welcher Impulsgeber der Erzeugung eines Sensorimpulses dient, welcher Sensorimpuls einen Zeitpunkt markiert, zu dem eine Schaufel den Sensor passiert;
b) einen dem Laufrad zugeordneten Markengeber zur Erzeugung eines Markenimpulses, wenn sich das Laufrad in einer bestimmten Nullposition befindet;
c) eine Auswerteeinrichtung mit einem Zuordnungsmodul, welchem die Sensorimpulse und die Markenimpulse zuführbar sind und welcher der Zuordnung jedes Sensorimpulses unter Berücksichtigung der Markenimpulse zu derjenigen Schaufel, die ihn verursacht hat, sowie der Umwandlung der Sensorimpulse jeder Schaufel in Schwingungsdaten, die einen Schwingungszustand der Schaufel charakterisieren, dient;
d) eine Darstellungseinrichtung mit einem Darstellungsmedium zur Darstellung der Schwingungsdaten;
wobei die Auswerteeinrichtung einen Speichermodul und einen Arbeitsspeicher, auf den der Speichermodul Zugriff hat, in dem für jede Schaufel eine Vielzahl von zeitlich aufeinanderfolgenden Schwingungsdaten aufnehmbar ist und aus dem die Schwingungsdaten von der Darstellungseinrichtung abrufbar sind, aufweist, wobei dem Speichermodul die Schwingungsdaten für alle Schaufeln zur Speicherung in dem Arbeitsspeicher zuführbar und bei einer Zuführung neuer Schwingungsdaten bereits gespeicherte Schwingungsdaten nach Art eines Schieberegisters umspeicherbar bzw. überschreibbar sind.

Zu den verschiedenen Bestandteilen des Monitorsystems wird folgendes ausgeführt:
a) Unter einem Impulsgeber, der in einer Sensoreinrichtung einem Sensor zugeordnet ist, ist jedwede zum Betrieb des Sensors und zur Verbindung des Sensors mit weiteren Einrichtungen erforderliche Einrichtung zu verstehen; ohne Absicht einer Einschränkung seien als Beispiele Verstärker, Impulsformer, elektroakustische Wandler und dergleichen genannt. Die wesentliche Funktion eines Impulsgebers ist, das von dem Sensor abgegebene Signal in einer für die notwendige Weiterverarbeitung geeigneten Art, Form und Intensität bereitzustellen.
b) Unter einem Markengeber ist jedwede Einrichtung zu verstehen, die weitgehend unabhängig von Schwingungszuständen der Schaufeln eine Impulsfolge, nämlich eine Folge von Markenimpulsen, abgibt, welche mit der Rotation des Laufrads synchron oder zumindest synchronisierbar ist und welche dementsprechend aus der zeitlichen Lage eines Sensorimpulses relativ zu den Markenimpulsen einen Rückschluß darauf erlaubt, von welcher Schaufel der Sensorimpuls verursacht wurde. Auf den zitierten Stand der Technik wird hierzu verwiesen.
c) Zur Funktion der Umwandlung von Sensorimpulsen in Schwingungsdaten durch den Zuordnungsmodul sei bemerkt, daß diese Umwandlung ebenfalls jedwede erforderliche Transformation der Sensorimpulse bedeuten kann; hierfür kommt zunächst jedwede an sich bekannte und je nach Ausführung des Monitorsystems notwendige Analog-Digital-Wandlung, Verstärkung und/oder Impulsformung in Betracht. Die Sensorimpulse selbst stellen selbstverständlich bereits Signale dar, die einen Schwingungszustand einer Schaufel charakterisieren und somit, ggf. nach Analog-Digital-Wandlung, als Schwingungsdaten ansehbar sind. Es kommen aber auch komplexere Formen der Umwandlung in Betracht, so insbesondere Umwandlungen, die arithmetische Operationen mit den, ggf. aufbereiteten, Sensorimpulsen erfordern. Auf ein nachstehend beschriebenes Beispiel hierzu sei verwiesen.
d) Auch die Darstellung von Schwingungsdaten durch die Darstellungseinrichtung kann je nach Anforderung mit Rechenoperationen an den aus dem Arbeitsspeicher abgerufenen Schwingungsdaten verbunden sein; es ist keineswegs erforderlich, daß die Schwingungsdaten in einer unmittelbar der Darstellung zugänglichen Form gespeichert werden und daher vor ihrer tatsächlichen Darstellung keiner Überarbeitung mehr bedürfen. Entsprechende Maßnahmen sind in jedem Falle als in den Prozeß der Darstellung einbezogen zu verstehen. Unter einer "Darstellung" ist auch eine Aufbereitung der Schwingungsdaten zur weiteren Analyse, insbesondere im Rahmen eines Diagnosesystems zur Früherkennung von Schäden, verbunden. Eine solche Aufbereitung kann insbesondere bestehen in der Auswahl von Schwingungsdaten nach bestimmten Kriterien und in der Erzeugung von Signalen, die bestimmte Aussagen hinsichtlich der Schwingungsdaten symbolisieren.

In dem erfindungsgemäßen Monitorsystem erfolgt eine Verarbeitung der Sensorimpulse und Markenimpulse, welche besonders angepaßt ist an die große pro Zeiteinheit anfallende Zahl solcher Sensorimpulse und Markenimpulse, wie sie bei der betrieblichen Überwachung einer üblichen Turbomaschine, wie z.B. einer Niederdruck-Dampfturbine in einem Kraftwerk, auftreten. Ein Laufrad einer Niederdruck-Dampfturbine in einem Kraftwerk weist üblicherweise zwischen 50 und 100 Schaufeln auf und dreht sich im regulären Betrieb mit einer Drehzahl von 1500, 1800, 3000 oder 3600 Umdrehungen pro Minute, je nach der Frequenz des Stromversorgungsnetzes, in das das Kraftwerk Energie einspeist, und je nachdem, ob ein der Dampfturbine nachgeschalteter Generator vier oder zwei rotierende Magnetpole hat. Von jedem Sensor eines Laufrades fallen dementsprechend Sensorimpulse mit Frequenzen von mehreren Kilohertz an, was sowohl eine sehr schnelle Verarbeitung als auch eine besondere Art und Weise der Speicherung und Auswertung der Sensorimpulse bzw. der aus diesen Sensorimpulsen gewinnbaren, die Schwingungszustande der Schaufeln charakterisierenden Schwingungsdaten erfordert.

Mit dem Monitorsystem werden die Schwingungsdaten zu Schwingungszuständen von Schaufeln gewonnen durch Auswertung der zeitlichen Abfolge von Impulsen, wobei jeder Impuls einen zeitlichen Verlauf hat, welcher im wesentlichen einer vorgegebenen Norm entspricht. Dementsprechend ist es angebracht und vorteilhaft, aus den unter Umständen im zeitlichen Verlauf komplexen Impulsen, die unmittelbar von einem Sensor abgenommen werden, Sensorimpulse zu formen, welche einer vorwählbaren Norm entsprechen. Normen, die hierfür in Frage kommen, sind beispielsweise die TTL-Norm und die ECL-Norm. Die weitere Auswertung der Sensorimpulse hat sich insbesondere auf ihre Zuordnung zu den einzelnen Schaufeln, die aus ihrer zeitlichen Beziehung zu den Markenimpulsen ermittelt wird, und die zeitlichen Korrelationen unter der jeweils einer Turbinenschaufel zugeordneten Sensorimpulse zu richten. Aus diesen Korrelationen ist auf den Schwingungszustand einer Schaufel zu schließen; der Schwingungszustand einer Schaufel ist den zugehörigen Sensorimpulsen nach Art einer Puls-Phasen-Modulation aufmoduliert. Demgemäß kommen zur Ermittlung von Größen, die den Schwingungszustand unmittelbar kennzeichnen und weitgehend unabhängig sind von der umlaufenden Bewegung der Schaufel und der dadurch bedingten Art der Sensorimpulse, alle denkbaren Verfahren zur Demodulation eines Signals, dem Information durch Puls-Phasen-Modulation aufgeprägt ist, in Betracht.

Der Arbeitsspeicher oder ein anderer, insbesondere der Darstellungseinrichtung zugeordneter, Speicher ist vorzugsweise so groß bemessen, daß er beim regulären Betrieb, wenn also üblicherweise das Laufrad mit den erwähnten 1500, 1800, 3000 oder 3600 Umdrehungen pro Minute rotiert, für einen Zeitraum von mehr als 10 Sekunden, vorzugsweise von etwa 20 Sekunden, alle anfallenden Schwingungsdaten speichern kann. Mit besonderem Vorteil ist ein Speichern aller anfallenden Schwingungsdaten für einen Zeitraum bis zu einer Minute möglich, wobei die Durchführung eines solchen Speicherns eventuell von einem bestimmten Kriterium abhängig gemacht sein kann, beispielsweise einem Warnsignal, das von einem mit dem Monitorsystem verbundenen, weiter unten detailliert beschriebenen Prüfmodul abzugeben wäre. Im regulären Betrieb wird eine Speicherung der Schwingungsdaten über einen Zeitraum von etwa 20 Sekunden als ausreichend angesehen, wobei allerdings eine Möglichkeit zur Speicherung über einen längeren Zeitraum, insbesondere bis zu einer Minute, in einem kritischen Betriebszustand von Vorteil ist.

Vorteilhafterweise weist die Sensoreinrichtung zwei dem Laufrad zugeordnete und über einen Umfang des Laufrads voneinander beabstandete Sensoren auf, und für jede Schaufel wird jedes Schwingungsdatum berechnet aus einer zeitlichen Differenz zwischen einem zugeordneten Sensorsignal von einem ersten Sensor und einem zugeordneten Sensorsignal von einem zweiten Sensor. Auf diese Weise wird eine sogenannte Zwei-Sensor-Meßanordnung realisiert. Die Zwei-Sensor-Meßanordnung liefert als Schwingungsdatum eine Zeitdifferenz, die eine Summe aus einem konstanten Anteil ist, welcher durch die Drehzahl und den Durchmesser des Laufrads mit den Schaufeln gegeben ist und dem tangentialen Abstand zwischen den Sensoren entspricht, und einem Wert, welcher nur dann von Null verschieden sein kann, wenn die Schaufel eine Schwingung durchführt. Es versteht sich, daß nicht jedwede mögliche Schwingung einer Schaufel ein mit der Zwei-Sensor-Meßanordnung nachweisbares Signal liefert; jedoch sind Schaufelschwingungen, die in Umfangsrichtung des Laufrads erfolgen, zumindest dann nachweisbar, wenn ihre jeweilige Frequenz nicht der Drehfrequenz des Laufrads oder einem ganzzahligen Vielfachen dieser Drehfrequenz entspricht. Der mit der Zwei-Sensor-Meßmethode bestimmbare, oben definierte Wert entspricht ungefähr einem Weg, den die Schaufelspitze der schwingenden Schaufel in einem mit dem Laufrad mitgedrehten Bezugssystem zwischen dem ersten Sensor und dem zweiten Sensor zurückgelegt hat. Von einer eingehenden Darstellung der Auswertung der Sensorimpulse im Rahmen der Zwei-Sensor-Meßmethode sei an dieser Stelle abgesehen und auf den bereits erwähnten Aufsatz "Berührungslose Schaufelschwingungsmeßtechnik" verwiesen.

Als Sensoren kommen vorzugsweise elektromagnetische Sensoren zum Einsatz. Solche elektromagnetische Sensoren sind beispielsweise in einem Gehäuse einer Turbomaschine einbaubar in der Weise, daß sich die Schaufelspitzen aller Schaufeln auf einem Laufrad dem Sensor nacheinander bis auf eine kurze Distanz nähern und wieder entfernen, wenn sich das Laufrad dreht. Eine Schaufel, deren Spitze sich dergestalt in der Nähe des Sensors befindet, modifiziert ein magnetisches Feld, das von einem Magneten in dem Sensor ausgeht, und induziert somit einen elektrischen Impuls in einer dem Sensor zugehörigen Spule. Ein solcher elektrischer Impuls ist naturgemäß bipolar, da in diesem Impuls beide möglichen elektrischen Polaritäten nacheinander auftreten. Der "Nulldurchgang" des Impulses, d.h. der Zeitpunkt, zu dem seine Polarität wechselt, ist ein bevorzugtes Kriterium zur Auslösung eines normierten Sensorimpulses in einem dem Sensor nachgeschalteten Impulsgeber.

Der Arbeitsspeicher ist vorzugsweise so groß bemessen, daß er jeweils alle Schwingungsdaten eines Zeitraums, in dem das Laufrad zumindest 100 Umdrehungen ausführt, speichern kann. So ist sichergestellt, daß die in dem Arbeitsspeicher verfügbare Gesamtheit von Daten stets ein klares und vollständiges Bild von den Schwingungszuständen der überwachten Schaufeln ergibt.

Das Monitorsystem hat vorzugsweise eine um einen Prüfmodul ergänzte Auswerteeinrichtung, wobei der Prüfmodul die in dem Arbeitsspeicher gespeicherten Schwingungsdaten nach zumindest einem Prüfkriterium überprüft und der Darstellungseinrichtung ein entsprechendes Warnsignal zustellt, wenn er Schwingungsdaten auffindet, die dem Prüfkriterium nicht genügen. Ein solcher Prüfmodul dient insbesondere dazu, erhöhte Beanspruchungen der Schaufeln durch Schwingungen zu erkennen, und dies vorteilhafterweise so rechtzeitig, daß der Betriebszustand der Schaufeln geändert werden kann, bevor eine Beeinträchtigung eintritt. Mit besonderem Vorteil ist das Prüfkriterium des Prüfmoduls so formuliert, daß bereits ein Warnsignal erzeugt wird, bevor Schwingungszustande eintreten, die die Lebensdauer der Schaufeln beeinträchtigen können. Für den Fall, daß vor der Möglichkeit des Abänderns eines gefährdenden Schwingungszustands eine die Lebensdauer der entsprechenden Schaufel beeinträchtigende Beanspruchung eintreten sollte, kann für jede Schaufel ein Lebensdauerverlust ermittelt und dargestellt werden, ggf. mit zusätzlichen Warnungen, wenn sich im Laufe der Zeit akkumulierte Lebensdauerverluste zu einem Wert aufsummieren, der einer überhaupt anzunehmenden Lebensdauer einer Schaufel bedenklich nahe kommt.

Die Reaktion der Darstellungseinrichtung auf ein Warnsignal von dem Prüfmodul erfolgt vorzugsweise derart, daß aus dem Arbeitsspeicher eine Mehrzahl von Schwingungsdaten unter Einschluß der Schwingungsdaten, die dem Prüfkriterium nicht genügen, abgerufen und, vorzugsweise zusammen mit einer Warnung, dargestellt werden. Gegebenenfalls ist eine zusätzliche Auswertung des Warnsignals und der diese verursachenden Schwingungsdaten möglich, vor allem im Hinblick auf einen möglichen Verbrauch an Lebensdauer bzw., gleichwertig ausgedrückt, Zuwachs an Ermüdung der Schaufel, zu der die Schwingungsdaten gehören. Eine solche Auswertung kann sowohl in der Auswerteeinrichtung als auch in der Darstellungseinrichtung erfolgen.

Das Abrufen von Schwingungsdaten durch die Darstellungseinrichtung erfolgt vorzugsweise jeweils für einen Zeitraum von mehr als zehn Sekunden, insbesondere etwa 20 Sekunden. Derart steht der Darstellungseinrichtung auf jedes Warnsignal zur Darstellung und gegebenenfalls weiteren Analyse eine große Datenmenge unter Einschluß zumindest wesentlicher Teile der "Vorgeschichte" und des "Nachspanns" eines das Warnsignal verursachenden Schwingungszustands zur Verfügung, was die Untersuchung des Schwingungszustands unterstützen und vertiefen kann.

Als Prüfkriterien kommen vielfältige, unter Umständen auch komplexe, Kriterien in Frage. So können zunächst vielzählige, zeitlich aufeinanderfolgende Schwingungsdaten in kombinierter Form, beispielsweise in Form eines Mittelwertes, untersucht werden, so daß die Beanspruchung der Schaufeln durch Schwingungen über eine Mehrzahl, vorzugsweise eine große Vielzahl, von Umdrehungen des Laufrads gemittelt wird. Zur Prüfung, ob ein bedenklicher Schwingungszustand vorliegt, kann ein solcher Mittelwert mit einem geeigneten Grenzwert verglichen werden. Zur Gewinnung von Aussagen, die sich auf das gesamte Laufrad oder größere Segmente des Laufrads beziehen, können Schwingungsdaten aller Schaufeln oder Schwingungsdaten bestimmter Mehrzahlen von Schaufeln zusammen ausgewertet werden. Selbstverständlich ist auch eine Prüfung der Schwingungsdaten für jede einzelne Schaufel gesondert möglich; ob sie durchgeführt wird oder nicht, kann gegebenenfalls von weiteren Prüfkriterien abhängig gemacht werden. Sofern entsprechende Sensoreinrichtungen zur Verfügung stehen, beispielsweise eine Sensoreinrichtung mit Zwei-Sensor-Meßanordnung, ist außer dem Nachweis eines Schwingungszustandes einer einzelnen Schaufel für sich auch der Nachweis einer sogenannten Systemschwingung, d.h. einer Schwingung der gesamten Anordnung aus Laufrad und Schaufeln, möglich. Auch hierfür sind geeignete Prüfkriterien formulierbar. Die den Prüfkriterien zugeordneten Warnsignale und Warnungen können ihrer jeweiligen Bedeutung entsprechend abgefaßt sein; eine Warnung kann, je nach der Bedeutung des zugehörigen Prüfkriteriums, einen Charakter zwischen einer einfachen Feststellung und einer unbedingten Aufforderung, den zu Schwingungen führenden Betriebszustand sofort zu beenden, haben.

Das Monitorsystem ist mit besonderem Vorzug ausgelegt zur Darstellung von Schwingungszuständen von Schaufeln auf mehreren Laufrädern in einer Turbomaschine oder in mehreren Turbomaschinen; dergestalt ermöglicht das Monitorsystem eine vollständige Überwachung einer Anlage mit einer Turbomaschine, die Schaufeln aufweist, welche durch Schwingungen gefährdet werden konnten. Ein solches Monitorsystem ermöglicht bevorzugtermaßen auch, die Schwingungszustande jeder Schaufel auf dem Laufrad bzw. den Laufrädern darzustellen.

Das Monitorsystem jedweder Ausbildung eignet sich besonders zur Diagnose einer Turbomaschine, wobei während des Betriebs der Turbomaschine Schwingungsdaten von allen Schaufeln der Turbomaschine in dem Arbeitsspeicher zur Darstellung bereitgehalten werden. Von besonderer Bedeutung ist dies bei einer Dampfturbine, insbesondere einer Sattdampf-Dampfturbine. In derartigen Sattdampf-Dampfturbinen, die insbesondere als Niederdruck-Turbinen in Turbosätzen eingesetzt sind, sind die Schaufeln relativ lang und erreichen in Endstufen Längen von einem Meter und mehr. Für solche Schaufeln kommen schwingungsdämpfende Anbauteile wie beispielsweise Deckbänder nicht mehr in Betracht, so daß an diesen Schaufeln Schwingungen bevorzugtermaßen und im größten Umfang auftreten. Speziell die Überwachung dieser Schaufeln ist daher im Rahmen einer Diagnose, die sich vorteilhafterweise auf dem gesamten Turbosatz und alle Anlagen, die mit dem Turbosatz verbunden sind, bezieht, von besonderer Bedeutung.

Ausführungsbeispiele des Monitorsystems werden nunmehr anhand der Zeichnung erläutert. In der Zeichnung zeigen:
- Figur 1: ein Laufrad einer Turbine mit Turbinenschaufeln und einer Sensoreinrichtung sowie eine Auswerteeinrichtung nebst Darstellungseinrichtung;
- Figur 2: eine Auswerteeinrichtung nebst Darstellungseinrichtung für das Monitorsystem im Rahmen einer besonderen Ausgestaltung.

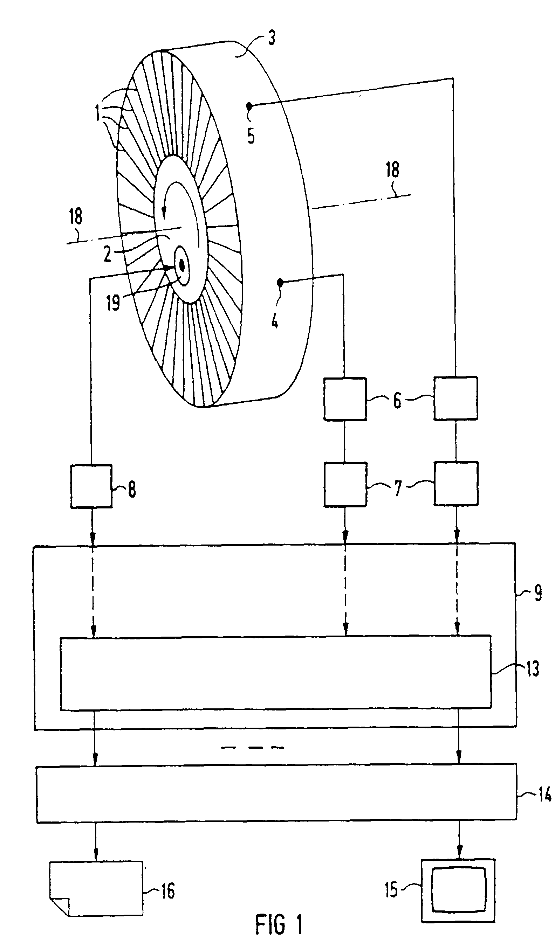

Figur 1 zeigt einen Teil einer Turbomaschine 3, insbesondere ein Laufrad 2, auf dem Schaufeln 1 (symbolisiert durch radiale Striche) befestigt sind. Das Laufrad 2 ist mit den Schaufeln 1 um eine Achse 18 in Richtung des gebogenen Pfeils drehbar. Zum Nachweis von Schwingungszuständen der Schaufel 1 ist die Turbomaschine 3 versehen mit einer Sensoreinrichtung, umfassend einen ersten Sensor 4 und einen zweiten Sensor 5 (beide Sensoren sind durch schwarze Punkte symbolisiert) sowie diesen Sensoren 4, 5 zugeordnete Verstärker 6 und Impuls; geber 7. Wenn sich das Laufrad 2 in der dargestellten Weise dreht, wird jede Schaufel 1 zuerst an dem ersten Sensor 4 und dann an dem zweiten Sensor 5 vorbeigeführt. Bei einer vollständigen Umdrehung des Laufrades 2 ergeben sich somit für jede Schaufel 1 zwei Sensorsignale. Um die Zuordnung der Sensorsignale zu den Schaufeln 1 zu ermöglichen, weist das Laufrad 2 ferner eine Marke 19 auf, die stets weitgehend unbeeinflußt von Schwingungen der Schaufeln 1 oder des Gesamtsystems aus den Schaufeln 1 und dem Laufrad 2 bleibt und von einem Markengeber 8 beobachtet wird. Wann immer sich die Marke 19 an einer vorgegebenen Stelle befindet, gibt der Markengeber 8 einen Markenimpuls ab. Die zeitliche Lage der Sensorimpulse zu den Markenimpulsen erlaubt die gewünschte Zuordnung der Sensorimpulse zu den einzelnen Schaufeln 1. Die Impulsgeber 7 sowie der Markengeber 8 liefern ihre Sensor- oder Markenimpulse an eine Auswerteeinrichtung 9. In dieser Auswerteeinrichtung 9 werden die Sensorimpulse und die Markenimpulse zunächst in der Weise verarbeitet, daß die Sensorimpulse den Schaufeln 1, von denen sie ausgehen, zugeordnet werden, und anschließend werden die solcherart zugeordneten Sensorimpulse umgewandelt in Schwingungsdaten, welche die Schwingungszustande der Schaufeln 1 charakterisieren. Diese Schwingungsdaten werden in einen Arbeitsspeicher 13 in der Auswerteeinrichtung 9 eingespeichert und stehen dort zur Darstellung durch eine Darstellungseinrichtung 14, die Zugriff auf den Arbeitsspeicher 13 hat, zur Verfügung. Die Darstellung der Schwingungsdaten kann erfolgen auf verschiedenen Darstel-lungsmedien 15 und 16, insbesondere auf einem Bildschirm 15 und/oder auf einem Ausdruck 16. Die Art und Weise der Darstellung der Schwingungszustande unterliegt keinerlei Beschränkungen. Die in Figur 1 dargestellte Anordnung mit einem ersten Sensor 4 und einem zweiten Sensor 5 erlaubt die Realisierung der aus dem zitierten Stand der Technik bekannten Zwei-Sensor-Meßmethode, die zum Nachweis von Schwingungszuständen besonders erfolgreich ist.

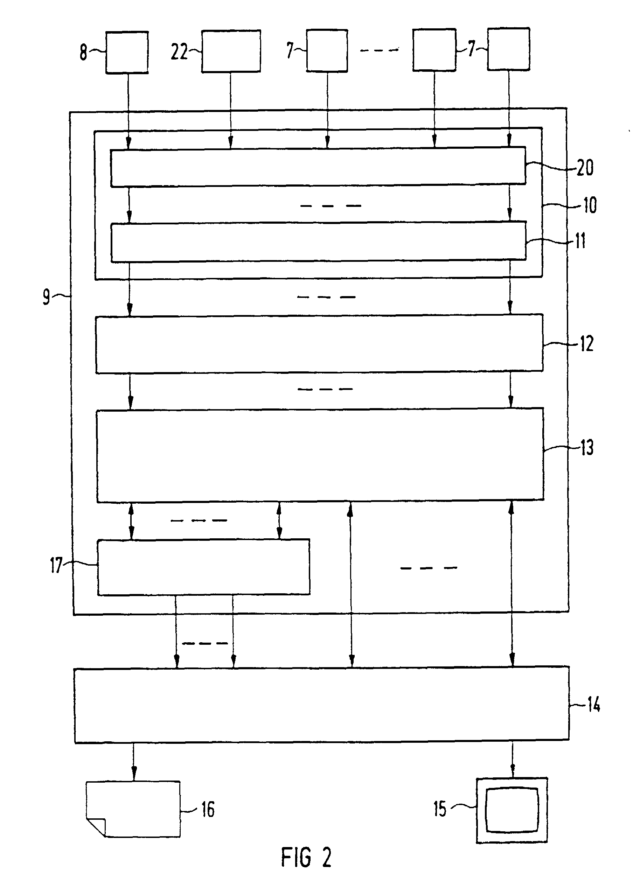

Einzelheiten zur Verarbeitung der Sensorimpulse und Markenimpulse gehen aus dem Ausführungsbeispiel gemäß Figur 2 hervor. In dieser Figur ist das Hauptaugenmerk gelegt auf die Darstellung der Strukturen einer besonders bevorzugten Ausführungsform der Auswerteeinrichtung 9 sowie der Darstellungseinrichtung 14. Der Auswerteeinrichtung 9 werden von einem Markengeber 8 sowie vielzähligen Impulsgebern 7 Markenimpulse bzw. Sensorimpulse zugeführt. Außerdem ist ein analoger Geber 22 skizziert, durch den der Auswerteeinrichtung 9 weitere analoge Meßdaten über die Turbomaschine, an die die Auswerteeinrichtung 9 angeschlossen ist, zuführbar sind. Die Auswerteeinrichtung 9 ist modular aufgebaut und umfaßt einen Zuordnungsmodul 10, dem die Impulsgeber 7 die Sensorimpulse, der Markengeber 8 die Markenimpulse und der analoge Geber 22 die analogen Meßdaten zustellen. In dem Zuordnungsmodul 10 erfolgt zunächst eine Zuordnung aller eingegebenen Impulse und Meßdaten zu den einzelnen Schaufeln; anschließend werden diese Impulse und Daten umgewandelt in Schwingungsdaten, welche der weiteren, vorzugsweise digitalen, Bearbeitung angepaßt sind. Diese Umwandlung impliziert insbesondere für jede Schaufel die Demodulation der nach Art der Puls-Phasen-Modulation mit den Schwingungen der Schaufel modulierten Folge der zugehörigen Sensorimpulse. Der Zuordnungsmodul 10 liefert die Schwingungsdaten an einen Speichermodul 12, welcher auf einen Arbeitsspeicher 13 zugreift und die Schwingungsdaten in diesen Arbeitsspeicher 13 einspeichert. Das Einspeichern erfolgt derart, daß der Arbeitsspeicher 13 als Schieberegister betrieben wird; aufgrund der naturgemäß endlichen Speicherkapazität des Arbeitsspeichers 13 wird beim Eintreffen eines neuen Satzes von Schwingungsdaten der älteste gespeicherte Satz von Schwingungsdaten gelöscht und überschrieben mit dem zweitältesten Satz und so fort, bis schließlich der Platz des jüngsten gespeicherten Satzes von Schwingungsdaten zur Verfügung steht zum Einspeichern des neuen Satzes.

Mit dem Arbeitsspeicher 13 kommuniziert die bereits erwähnte Darstellungseinrichtung 14, welche im wesentlichen beliebigen Zugriff auf den Arbeitsspeicher 13 hat und nach Vorgabe Schwingungsdaten aus diesem abrufen und auf Darstellungsmedien 15 und 16 darstellen kann. Außerdem kommuniziert der Arbeitsspeicher 13 mit einem Prüfmodul 17, welcher die eingespeicherten Schwingungsdaten nach einem Prüfkriterium oder mehreren Prüfkriterien prüft und Warnsignale an die Darstellungseinrichtung 14 gibt, wenn Schwingungsdaten ermittelt werden, die einem Prüfkriterium nicht genügen. Auf diese Weise wird mit Hilfe des Prüfmoduls 17 eine Dauerüberwachung der Schaufeln auf Schwingungen, insbesondere bedenkliche Schwingungen, möglich, und die Methode der Darstellung von Schwingungszuständen von Schaufeln wird für eine ständige Diagnose erschlossen. Die weitere Verarbeitung der Warnsignale obliegt der Darstellungseinrichtung 14; auf ein Warnsignal können zunächst die von dem Prüfmodul 17 ermittelten Schwingungszustande dargestellt und gegebenenfalls entsprechende Warnungen erstellt werden.

Der Zuordnungsmodul 10 ist seinerseits strukturiert und enthält einen Sortier-Untermodul 20, welcher die bereits erwähnte Zuordnung der Sensorimpulse zu den Schaufeln vornimmt, und ein Rechen-Untermodul 11, der mit Daten aus dem Sortier-Untermodul 20 beaufschlagt wird und allfällig notwendige Umwandlungen der Sensorimpulse und die Bereitstellung in der weiteren Verarbeitung angepaßter Form besorgt. Es sei erwähnt, daß die dargestellte Anordnung von Sortier-Untermodul 20 und Rechen-Untermodul keineswegs zwingend und ohne weiteres auch in umgekehrter Weise realisierbar ist. In diesem Zusammenhang sei nochmals darauf hingewiesen, daß Formate und Werte der Schwingungsdaten, die in der Auswerteeinrichtung 9 erzeugt und verarbeitet und der Darstellungseinrichtung 14 bere-itgestellt werden, keineswegs unmittelbar der Interpretation durch einen Betreiber des Monitorsystems zugänglich sein müssen; die Aufbereitung der Schwingungsdaten in eine dem menschlichen Verständnis unmittelbar zugängliche Form kann je nach Ausgestaltung des Monitorsystems letzten Endes der Darstellungseinrichtung 14 überlassen bleiben.

Das Monitorsystem ermöglicht eine Diagnose einer Turbomaschine im Hinblick auf Schwingungszustande von Schaufeln in der Turbomaschine. Es kann einen wichtigen Beitrag leisten im Hinblick auf eine ständige Kontrolle der Turbomaschine und auf eine frühzeitige Erkennung möglicher Beeinträchtigungen, wodurch ein deutlicher Gewinn an Betriebssicherheit und eine erhöhte Flexibilität beim Betrieb erreichbar sind.

## Patentansprüche

1. Monitorsystem zur Darstellung von Schwingungszuständen einer Vielzahl von Schaufeln (1) auf einem rotierenden Laufrad (2)
a) mit einer ortsfesten Sensoreinrichtung (4, 5, 6, 7) mit zumindest einem dem Laufrad (2) zugeordneten Sensor (4, 5) und einem damit verbundenen Impulsgeber (7), welcher Impulsgeber (7) der Erzeugung eines Sensorimpulses dient, welcher Sensorimpuls einen Zeitpunkt markiert, zu dem eine Schaufel (1) den Sensor (4, 5) passiert;
b) mit einem dem Laufrad (2) zugeordneten Markengeber (8) zur Erzeugung eines Markenimpulses, wenn sich das Laufrad (2) in einer bestimmten Nullposition befindet;
c) mit einer Auswerteeinrichtung (9) mit einem Zuordnungsmodul (10), welchem die Sensorimpulse und die Markenimpulse zuführbar sind und welcher der Zuordnung jedes Sensorimpulses unter Berücksichtigung der Markenimpulse zu derjenigen Schaufel (1), die ihn verursacht hat, sowie der Umwandlung der Sensorimpulse jeder Schaufel (1) in Schwingungsdaten , die einen Schwingungszustand der Schaufel (1) charakterisieren, dient;
d) mit einer Darstellungseinrichtung (14) mit einem Darstellungsmedium (15,16) zur Darstellung der Schwingungsdaten **dadurch gekennzeichnet, daß** die Auswerteeinrichtung (9) einen Speichermodul (12) und einen Arbeitsspeicher (13), auf den der Speichermodul (12) Zugriff hat, in dem für jede Schaufel (1) eine Vielzahl von zeitlich aufeinanderfolgenden Schwingungsdaten aufnehmbar ist und aus dem die Schwingungsdaten von der Darstellungseinrichtung (14) abrufbar sind, aufweist, wobei dem Speichermodul (12) die Schwingungsdaten für alle Schaufeln (1) zur Speicherung in dem Arbeitsspeicher (13) zuführbar und bei einer Zuführung neuer Schwingungsdaten bereits gespeicherte Schwingungsdaten nach Art eines Schieberegisters umspeicherbar bzw. überschreibbar sind.

2. Monitorsystem nach Anspruch 1, bei dem die Sensoreinrichtung (4, 5, 6, 7) zwei dem Laufrad (2) zugeordnete und über den Umfang des Laufrads (2) voneinander beabstandete Sensoren (4, 5) aufweist, und eine zeitliche Differenz zwischen einem zugeordneten Sensorimpuls von einem ersten Sensor (4) und einem zugeordneten Sensorimpuls von einem zweiten Sensor (5) der Berecknung jedes Schwingungsdatums für jede Schaufel (1) dient.

3. Monitorsystem nach Anspruch 1 oder 2, bei dem der bzw. jeder Sensor (4, 5) ein elektromagnetischer Sensor (4, 5) ist.

4. Monitorsystem nach Anspruch 3, bei dem der bzw. jeder Sensor (4, 5) ein abstandsempfindlicher Sensor (4, 5) ist, mit dem ein Impuls abgebbar ist, wenn sich eine Schaufel (1) an ihm vorbeibewegt.

5. Monitorsystem nach einem der vorhergehenden Ansprüche, bei dem in dem Arbeitsspeicher (13) alle Schwingungsdaten eines Zeitraums, in dem das Laufrad (2) zumindest 100 Umdrehungen ausführt, speicherbar sind.

6. Monitorsystem nach einem der vorhergehenden Ansprüche, bei dem die Auswerteeinrichtung (9) einen Prüfmodul (17) beinhaltet zur Überprüfung der in dem Arbeitsspeicher (13) gespeicherten Schwingungsdaten nach zumindest einem Prüfkriterium und zur Zustellung eines entsprechendes Warnsignal an die Darstellungseinrichtung (14), wenn Schwingungsdaten dem Prüfkriterium nicht genügen.

7. Monitorsystem nach Anspruch 6, bei dem mit der Darstellungseinrichtung (15) auf ein Warnsignal aus dem Arbeitsspeicher (13) eine Mehrzahl von Schwingungsdaten unter Einschluß der Schwingungsdaten, die dem Prüfkriterium nicht genügen, abrufbar und, vorzugsweise zusammen mit einer Warnung, darstellbar sind.

8. Monitorsystem nach Anspruch 7, bei dem mit der Darstellungseinrichtung (15) die Schwingungsdaten jeweils für einen Zeitraum von mehr als zehn Sekunden, vorzugsweise etwa 20 Sekunden, abrufbar sind.

9. Monitorsystem nach einem der vorhergehenden Ansprüche, bei dem Schwingungszustande von Schaufeln (1) auf mehreren Laufrädern (2) in einer Turbomaschine (3) oder mehreren Turbomaschinen (3) darstellbar sind.

10. Monitorsystem nach einem der vorhergehenden Ansprüche, mit dem Schwingungszustände jeder Schaufel (1) auf dem Laufrad (2) bzw. den Laufrädern (2) darstellbar sind.

11. Monitorsystem nach einem der vorhergehenden Ansprüche, mit einem Speicher (13), in welchem bei einem regulären Betrieb die in einem Zeitraum von 20 sec auftretenden Schwingungsdaten der Schaufeln (1) speicherbar sind, und in welchem auf ein Warmsignal hin bei einem Kritischen Betriebszustand die in einem Zeitraum von 60 sec auftretenden Schwingerungsdaten der Schaufeln (1) Speicherbar sind.

12. Verwendung eines Monitorsystems nach einem der vorhergehenden Ansprüche zur Diagnose einer Turbomaschine (3), wobei während des Betriebs der Turbomaschine (3) Schwingungsdaten an allen Schaufeln (1) der Turbomaschine (3) in dem Arbeitsspeicher (13) zur Darstellung bereitgehalten werden.

13. Verwendung nach Anspruch 12, wobei die Turbomaschine (3) eine Dampfturbine (3), insbesondere eine Sattdampf-Dampfturbine (3), ist.

## Claims

1. Monitoring system for representing vibration conditions of a multiplicity of blades (1) on a rotating rotor (2),
a) having a stationary sensor device (4, 5, 6, 7) with at least one sensor (4, 5) associated with the rotor (2) and a pulse generator (7) which is connected thereto and serves to generate a sensor pulse which marks an instant at which a blade (1) passes the sensor (4, 5);
b) having a mark pick-up (8) which is associated with the rotor (2) and is for generating a mark pulse when the rotor (2) is in a certain zero position;
c) having an analysis device (9) having an allocation module (10) to which the sensor pulses and the mark pulses can be supplied and which serves for the allocation of each sensor pulse, taking account of the mark pulses, to that blade (1) which has caused it and for the conversion of the sensor pulses of each blade (1) into vibration data which characterize a vibration condition of the blade (1);
d) having a representation device (14) with a representation medium (15, 16) for representing the vibration data,
characterized in that the analysis device (9) has a memory module (12) and a working memory (13), to which the memory module (12) has access, in which for each blade (1) a multiplicity of vibration data following successively in time can be recorded and from which the vibration data can be called up by the representation device (14), the memory module (12) being able to be fed the vibration data for all the blades (1) for storage in the working memory (13) and, when new vibration data are fed in, already stored vibration data being able to be re-stored or overwritten.

2. Monitoring system according to Claim 1, in which
the sensor device (4, 5, 6, 7) has two sensors (4, 5), which are associated with the rotor (2) and are spaced apart over the periphery of the rotor (2), and
a time difference between an associated sensor pulse from a first sensor (4) and an associated sensor pulse from a second sensor (5) serves for calculating each item of the vibration data for each blade (1).

3. Monitoring system according to Claim 1 or 2, in which the or each sensor (4, 5) is an electromagnetic sensor (4, 5).

4. Monitoring system according to Claim 3, in which the or each sensor (4, 5) is a sensor (4, 5) which is sensitive to distance and with which a pulse can be emitted when a blade (1) passes it.

5. Monitoring system according to one of the preceding claims, in which all the vibration data can be stored in the working memory (13) for a period in which the rotor (2) executes at least 100 revolutions.

6. Monitoring system according to one of the preceding claims, in which the analysis device (9) contains a test module (17) for checking the vibration data stored in the working memory (13) in accordance with at least one test criterion and for supplying an appropriate warning signal to the representation device (14) when vibration data do not satisfy the test criterion.

7. Monitoring system according to Claim 6, in which, when there is a warning signal, a multiplicity of vibration data from the working memory (13), including the vibration data which do not satisfy the test criterion, can be called up and, preferably together with a warning can be represented by the representation device (15).

8. Monitoring system according to Claim 7, in which the vibration data can be called up for a period of more than 10 seconds, preferably approximately 20 seconds, in each case by the representation device (15) .

9. Monitoring system according to one of the preceding claims, in which vibration conditions of blades (1) on a plurality of rotors (2) in a turbomachine (3) or a plurality of turbomachines (3) can be represented.

10. Monitoring system according to one of the preceding claims, by means of which vibration conditions of each blade (1) on the rotor (2) or the rotors (2) can be represented.

11. Monitoring system according to one of the preceding claims, having a memory (13), in which, in normal operation, vibration data of the blades (1) occurring in a period of 20 seconds can be stored, and in which, in critical operating conditions, when there is a warning signal the vibration data of the blades (1) occurring in a period of 60 seconds can be stored.

12. Use of a monitoring system according to one of the preceding claims for diagnosis of a turbomachine (3), vibration data on all the blades (1) of the turbomachine (3) being held ready for representation in the working memory (13) during the operation of the turbomachine (3).

13. Use according to Claim 12, whereby the turbomachine (3) is a steam turbine (3), in particular a saturated-steam steam turbine (3).

## Revendications

1. Système de contrôle destiné à représenter des états vibratoires d'une pluralité d'ailettes (1) sur une roue mobile (2) rotative comprenant
a) un dispositif de détection (4, 5, 6. 7) poste fixe comportant au moins un détecteur (4, 5) associé à la roue mobile (2) et un générateur d'impulsions (7) qui est relié au détecteur et sert à produire une impulsion de détecteur qui repère un instant auquel une ailette (1) passe devant le détecteur (4, 5) ;
b) un générateur de repère (8) associé à la roue mobile (2) et destiné à générer une impulsion de repère lorsque la roue mobile (2) se trouve dans une position zéro définie ;
c) un dispositif de traitement (9) équipé d'un module d'attribution (10) auquel peuvent être transmises les impulsions de détecteur et les impulsions de repère et qui sert à attribuer chaque impulsion de détecteur, en prenant en compte les impulsions de repère, à l'ailette (1) qui en est à l'origine, ainsi qu'à transformer les impulsions de détecteur de chaque ailette (1) en données de vibration caractérisant un état vibratoire de l'ailette (1) ;
d) un dispositif de représentation (14) comportant un support de représentation (15, 16) destiné à représenter les données de vibration
caractérisé en ce que le dispositif de traitement (9) le dispositif de traitement (9) comporte un module de mémorisation (12) et une mémoire de travail (13) à laquelle a accès le module de mémorisation (12), dans laquelle on peut entrer pour chaque ailette (1) une pluralité de données de vibration se succédant dans le temps et dans laquelle le dispositif de représentation (14) peut lire les données de vibration, les données de vibration de toutes les ailettes (1) pouvant être transmises au module de mémorisation (12) en vue de les mémoriser dans la mémoire de travail (13) et des données de vibration déjà mémorisées pouvant être déplacées à la manière d'un registre à décalage ou écrasées lors de la transmission de nouvelles données de vibration.

2. Système de contrôle selon la revendication 1, dans lequel le dispositif de détection (4, 5, 6, 7) comporte deux détecteurs (4, 5) associés à la roue mobile (2) et à distance l'un de l'autre sur le pourtour de la roue mobile (2) et une différence dans le temps entre une impulsion associée d'un premier détecteur (4) et une impulsion associée d'un deuxième détecteur (5) sert au calcul de chaque donnée de vibration pour chaque ailette (1).

3. Système de contrôle selon la revendication 1 ou 2, dans lequel le ou chaque détecteur (4, 5) est un détecteur (4, 5) électromagnétique.

4. Système de contrôle selon la revendication 3, dans lequel le ou chaque détecteur (4, 5) est un détecteur (4, 5) sensible à la distance qui permet de délivrer une impulsion lorsqu'une ailette (1) passe devant lui.

5. Système de contrôle selon l'une des revendications précédentes, dans lequel toutes les données de vibration d'un laps de temps pendant lequel la roue mobile (2) effectue au moins 100 tours peuvent être mémorisées dans la mémoire de travail (13).

6. Système de contrôle selon l'une des revendications précédentes, dans lequel le dispositif de traitement (9) contient un module de contrôle (17) destiné à contrôler les données de vibration mémorisées dans la mémoire de travail (13) selon au moins un critère et à transmettre un signal avertisseur approprié au dispositif de représentation (14) lorsque des données de vibration ne satisfont pas au critère de contrôle.

7. Système de contrôle selon la revendication 6 dans lequel suite à un signal avertisseur, le dispositif de représentation (14) peut lire dans la mémoire de travail (13) une pluralité de données de vibration incluant les données de vibration qui ne satisfont pas au critère de contrôle et peut les représenter de préférence accompagnées d'une avertissement.

8. Système de contrôle selon la revendication 7 dans lequel le dispositif de représentation (14) peut lire les données de vibration pendant une durée de plus de dix secondes, de préférence d'environ 20 secondes.

9. Système de contrôle selon l'une des revendications précédentes, dans lequel on peut représenter des états vibratoires d'ailettes (1) sur plusieurs roues mobiles (2) d'une turbomachine (3) ou de plusieurs turbomachines (3).

10. Système de contrôle selon l'une des revendications précédentes permettant de représenter des états vibratoires de chaque ailette (1) sur la roue mobile (2) ou les roues mobiles (2).

11. Système de contrôle selon l'une des revendications précédentes comprenant une mémoire (13) dans laquelle en fonctionnement normal on peut mémoriser les données de vibration des ailettes (1) apparaissant pendant une durée de 20 secondes et dans laquelle, sur un signal avertisseur, on peut mémoriser dans un état de fonctionnement critique les données de vibration des ailettes (1) apparaissant pendant une durée de 60 secondes.

12. Utilisation d'un système de contrôle selon l'une des revendications précédentes pour effectuer un diagnostic sur une turbomachine (3), des données de vibration de toutes les ailettes (1) de la turbomachine (3) étant, pendant le fonctionnement de la turbomachine (3), tenues prêtes dans la mémoire de travail (13) en vue d'une visualisation.

13. Utilisation selon la revendication 12, la turbomachine (3) étant une turbine à vapeur (3), en particulier une turbine à vapeur saturée (3).
